# EUROPÄISCHE PATENTSCHRIFT

(11) **EP 2 129 639 B1**
(45) Veröffentlichungstag und Bekanntmachung des Hinweises auf die Patenterteilung: **19.01.2011**
(21) Anmeldenummer: 08734316.6
(22) Anmeldetag: 25.02.2008
(51) Int. Cl.: C04B 41/87

(54) **VERFAHREN ZUR HERSTELLUNG EINES BAUTEILS AUS EINER FASERVERSTÄRKTEN KERAMIK, INSBESONDERE ZUR VERWENDUNG ALS TRIEBWERKSKOMPONENTE**
METHOD FOR THE PRODUCTION OF A COMPONENT FROM FIBER-REINFORCED CERAMIC, PARTICULARLY FOR USE AS AN ENGINE COMPONENT
PROCÉDÉ DE FABRICATION D'UNE PIÈCE EN CÉRAMIQUE RENFORCÉE PAR DES FIBRES, À UTILISER NOTAMMENT COMME COMPOSANT DE GROUPE PROPULSEUR

(30) Priorität: 02.03.2007 DE 102007010675
(43) Veröffentlichungstag der Anmeldung: 09.12.2009
(73) Patentinhaber: Astrium GmbH, 81663 München (DE)
(72) Erfinder: BEYER, Steffen, 81827 München (DE); MEISTRING, Rolf, D-85625 Glonn (DE); MAIDL, Franz, 94574 Wallerfing (DE); SCHMIDT-WIMMER, Stephan, 85521 Dauchau (DE); WILHELMI, Christian, 85635 Höhenkirchen-Siegertsbrunn (DE)
(74) Vertreter: Hummel, Adam
(86) Internationale Anmeldenummer: PCT/DE2008/000335
(87) Internationale Veröffentlichungsnummer: WO 2008/106932

(56) Entgegenhaltungen:
- DE-B3- 10 348 123
- US-A1- 2003 143 436

## Beschreibung

Die Erfindung betrifft ein Verfahren zum Herstellen eines Bauteils, das einen Grundkörper und eine auf den Grundkörper aufgebrachte Schutzschicht aufweist, mit den Merkmalen des Oberbegriffs des Anspruchs 1.

Faserverstärkte Keramiken werden dort zum Einsatz gebracht, wo hohe Temperaturen und hohe Verschleißbelastungen vorherrschen. Typische Anwendungsfelder sind zum einen die Weltraumtechnologie, die chemische Anlagentechnik und in der Automobiltechnik die Bremsscheibentechnologie bzw. die Kupplungstechnologie. An der Oberfläche derartiger Keramikbauteile sind Kohlenstofffaserbündel eingebettet, die bei anhaltend hoher Temperatur unter Sauerstoffatmosphäre oxidieren, Leerstellen hinterlassen und dadurch die Grundlage für abrasiven Verschleiß bilden.

Zum Schutz des faserverstärkten keramischen Grundkörpers ist es deshalb bekannt, diesen zumindest teilweise mit einer Schutzschicht, die verschleiß-, korrosions- (bzw. oxidations-) oder abrasionsfest ist, zu versehen. Hierzu werden häufig dünne Schutzschichten aus einem keramischen Material, z.B. aus Siliziumcarbid (SiC), eingesetzt. Nachteile bekannter Schutzschichten bestehen darin, dass diese häufig aufgrund einer begrenzten Materialauswahl eine schlechte Anpassung der unterschiedlichen thermischen Ausdehnungskoeffizienten von Grundkörper und Schutzschicht aufweisen, was zu Rissbildungen in der Schutzschicht führen kann. Ferner sind häufig keine dichten Schutzschichten erzielbar, da die keramische Ausbeute beim Herstellungsprozess begrenzt ist und weiterhin Zersetzungsreaktionen stattfinden. Je nach Zusammensetzung kann die Schutzschicht nur für bestimmte Temperaturbereiche und begrenzte Anwendungszeiten wirksam sein, was beim Einsatz eines Bauteils in Hochtemperaturumgebungen zu beachten ist.

Aus der DE 103 48 123 B3 ist ein Verfahren zur Herstellung eines Bauteils aus einer mit Kohlenstofffasern verstärkten Siliziumcarbidkeramik und einer darauf aufgebrachten Schutzschicht bekannt. Gemäß diesem Verfahren wird ein Vorkörper für die Schutzschicht hergestellt, dessen Materialeigenschaften so einstellbar sind, dass sie den Eigenschaften der Schutzschicht in optimaler Weise genügen. Die Herstellung des Vorkörpers der Schutzschicht erfolgt vollständig entkoppelt von der Herstellung der Pressmasse des eigentlichen Bauteils. Der Vorkörper der Schutzschicht wird beim Pressen in einen CFK-Körper des Bauteils integriert, so dass dieser im Weiteren zusammen mit dem CFK-Körper carbonisiert und mit dem Silizium infiltriert wird. Durch das Einpressen des Vorkörpers der Schutzschicht während des Pressens des CFK-Körpers bildet sich zwischen dem CFK-Körper und dem Vorkörper der Schutzschicht eine flächige Verbindung aus, die durch Zerfließen von Trockenharz entsteht. Hierdurch entsteht eine gewünschte Anbindung zwischen dem CFK-Körper und dem Vorkörper der Schutzschicht. Schließlich härten der Vorkörper der Schutzschicht und der CFK-Körper zusammen aus. Nachteilig bei diesem Verfahren ist, dass das Herstellungsverfahren des Grundkörpers modifiziert werden muss. Weiterhin ist das Verfahren nur einsetzbar für die Verarbeitung von Pressmassen.

Aus der DE 197 46 598 A1 ist ein mit Kohlenstofffasern verstärkter Keramik-Verbundwerkstoff bekannt. Auf diesem ist eine aus drei Schichten bestehende Schutzschicht aufgebracht. Eine untere Oxidationsschutzschicht übernimmt die Funktion als Grundierung und Oberflächenversiegelung mit an den Grundwerkstoff angepassten thermischen Ausdehnungskoeffizienten aus einem oder mehreren der Materialien SiC, SiO₂ oder B. Eine mittlere Oxidationsschutzschicht übernimmt die Funktion eines Sauerstoffgetters durch Oxidbildung und/oder lokale Rissversiegelung durch Glasbildung aus einer oder mehreren Si- oder B-haltigen Verbindungen. Eine obere Oxidationsschutzschicht hat die Funktion des Erosionsschutzes und der Anpassung der Strahlungsemission und -absorption, und besteht z.B. aus SiC. Die Schutzschichten können über Schlicker aus anorganischen Füllstoffen, organischen Bindemitteln und Lösungsmitteln aufgebracht sein. Nachteilig an diesem Stand der Technik ist der komplexe Aufbau der Vielzahl an Schichtfolgen.

Aus der DE 101 33 635 A1 ist ferner ein Keramikverbundkörper bekannt, der eine Tragzone und eine Deckschicht aus Verbundkeramik aufweist, die für den reibenden Verschleiß vorgesehen und dem Luftzutritt ausgesetzt ist. Zwischen der Tragzone und der Deckschicht ist eine dem Verbundwerkstoff der Tragzone artverwandte Schutzschicht angeordnet, die Additive für die Ausbildung selbstheilender Schichten enthält und dem Oxidationsschutz von in der Tragzone enthaltenen oxidationsempfindlichen Fasern dient.

Aus der US 2003/0143436 A1 ist ein Verfahren zur Herstellung eines Bauteils aus einer faserverstärkten Keramik bekannt, bei dem auf einen kohlenfaserverstärkten Grundkörper (C/C) eine aus Siliziumcarbid bestehende Schutzschicht aufgebracht ist. Hierzu wird auf den bereitgestellten Grundkörper eine erste Schicht aus Schlicker mit reaktivem Kohlenstoff aufgebracht. Anschließend wird auf die erste Schicht eine zweite Schicht aus Schlicker mit Silizium aufgebracht. Es erfolgt die Durchführung einer thermischen Behandlung, in der das Silizium der zweiten Schicht verflüssigt wird, so dass das flüssige Silizium in die erste Schicht eindringt und mit dem reaktiven Kohlenstoff eine Reaktionsschutzschicht aus Siliziumcarbid ausbildet. Damit ist ein Schutz des Grundkörpers vor Oxidation bereitgestellt.

Es ist Aufgabe der Erfindung, einen Grundkörper aus einer mit Kohlenstofffasern verstärkten Keramik, die oxidationsempfindliche Anteile enthält, vor einer oxidativen Schädigung, insbesondere durch Luftzutritt, zu schützen, wobei ein daraus resultierendes Bauteil für den Hochtemperatureinsatz geeignet sein und eine verbesserte Eigenfestigkeit und Bruchzähigkeit aufweisen soll.

Diese Aufgabe wird durch das Verfahren mit den Merkmalen des Patentanspruches 1 gelöst. Vorteilhafte Ausführungsformen ergeben sich aus den abhängigen Patentansprüchen.

Ein Verfahren zur Herstellung eines Bauteils, das einen Grundkörper aus einer mit Kohlenstofffasern verstärkten Keramik und eine auf den Grundkörper aufgebrachte Schutzschicht aufweist, umfasst die folgenden Schritte: Bereitstellen des Grundkörpers; Aufbringen einer ersten Schicht auf den Grundkörper, wobei die erste Schicht Schlicker mit reaktivem Kohlenstoff umfasst; Aufbringen einer zweiten Schicht auf die erste Schicht, wobei die zweite Schicht Schlicker mit Silizium umfasst; und Durchführen einer thermischen Behandlung, in der das Silizium der zweiten Schicht verflüssigt wird, so dass das flüssige Silizium in die erste Schicht eindringt und mit dem reaktiven Kohlenstoff eine Reaktionsschutzschicht aus Siliziumcarbid ausbildet. Das Aufbringen der Schlicker kann entweder durch einfache Techniken wie Streich- / Pinsel- / Spachtel- und Tauchtechniken oder mittels voll automatisierbarer Spritzapparaturen erfolgen. Die Eigenfestigkeit und Bruchzähigkeit der Reaktionsschutzschicht wird erfindungsgemäß dadurch verbessert, dass dem Schlicker der ersten Schicht Verstärkungsfasern, insbesondere Kurzfasern aus einem kohlenstoffhaltigen Material, beigemengt werden.

Das erfindungsgemäße Verfahren erlaubt die Ausbildung einer als Reaktionsschutzschicht bezeichneten Schutzschicht auf einem faserverstärkten keramischen Grundkörper, welcher hinsichtlich seiner thermischen Ausdehnung an das Material des Grundköpers angepasst ist und darüber hinaus für den Hochtemperatureinsatz geeignet ist. Das Material des Grundkörpers ist derart gewählt, dass die Erweichungstemperatur oberhalb der Schmelztemperatur von Silizium liegt. Insbesondere muss die Schmelztemperatur oberhalb von 1420 °C gelegen sein, da beim Schritt des Durchführens der thermischen Behandlung Temperaturen von mindestens 1420 °C zum Aufschmelzen des Siliziums erreicht werden. Als Keramikmaterial für den Grundkörper wird insbesondere Siliziumcarbid (SiC) oder Kohlenstoff (C) gewählt. Der kohlenstofffaserverstärkte Grundkörper besteht dann aus C/C oder C/SiC. Insbesondere kann ein nach dem erfindungsgemäßen Verfahren hergestelltes Bauteil als Triebwerkskomponente eingesetzt werden.

Durch das getrennte Aufbringen von "reaktivem Kohlenstoff' in der ersten Schicht und "Silizium" in der zweiten Schicht lässt sich auf einfache Weise eine Anpassung an den thermischen Ausdehnungskoeffizienten des Materials des Grundkörpers vornehmen. Damit kann die Gefahr der Bildung von Rissen aufgrund unterschiedlicher thermischer Ausdehnung vermieden oder verringert werden.

Das erfindungsgemäße Verfahren weist fertigungstechnische Vorteile auf, da die Erzeugung der Reaktionsschutzschicht auf einem aus faserverstärktem keramischem Material gebildeten Grundkörper kostengünstig auch bei komplexen Strukturen realisierbar ist. Insbesondere ist es möglich, den Grundkörper in seiner endgültigen Form mit bekannten Herstellungsverfahren herzustellen. Erst in einer sich daran anschließenden Schrittfolge wird in der beschriebenen Weise die Reaktionsschutzschicht auf dem Grundkörper erzeugt, welche die in dem Grundkörper enthaltenen, oxidationsempfindlichen Kohlenstofffasern vor Korrosion bzw. Oxidation und ggf. auch Erosion schützt.

Zur Verbesserung der mechanischen Eigenschaften der Reaktionsschutzschicht kann ferner vorgesehen sein, dass dem Schlicker der ersten Schicht als Additive zu dem reaktiven Kohlenstoff pulverförmige inerte oder reaktive Stoffe zugefügt werden, welche die mechanischen Eigenschaften der Verstärkungsfasern in der ersten Schicht beeinflussen. Zur Beeinflussung der thermischen Ausdehnung der ersten Schicht kann vorgesehen sein, dem Schlicker der ersten Schicht als Additive zu dem reaktiven Kohlenstoff pulverförmige inerte oder reaktive Stoffe zuzufügen.

Die Ausbildung der Reaktionsschutzschicht durch das Aufbringen zweier Schichten auf den Grundkörper des zu fertigenden Bauteils bringt den Vorteil mit sich, dass die Volumenanteile des reaktiven Kohlenstoffs und des Siliziums auf einfache Weise in dem Schlicker festgelegt werden können. Insbesondere kann vorgesehen sein, dass durch den Volumenanteil des reaktiven Kohlenstoffs in der ersten Schicht und/oder den Volumenanteil des Siliziums in der zweiten Schicht der Konvertierungsgrad bzw. die Zusammensetzung der Reaktionsschicht steuerbar ist.

Es kann weiter vorgesehen sein, dass Silizium in dem Schlicker der zweiten Schicht in einer solchen Menge vorgesehen wird, dass bei der Bildung der Reaktionsschutzschicht ein Silizium-Überschuss vorliegt, und eine zumindest oberflächliche Silizierung der mit Kohlenstofffasern verstärkten Keramik des Grundkörpers hergestellt wird. Dadurch kann eine gute Anbindung der Reaktionsschutzschicht an den Grundkörper erzielt werden.

Eine andere Ausführungsform sieht vor, dass Silizium in dem Schlicker der zweiten Schicht in einer solchen Menge vorgesehen wird, dass bei der Bildung der Reaktionsschutzschicht ein Silizium-Überschuss vorliegt, um im Falle einer Sandwichstruktur des Grundkörpers eine innere Oberfläche des Grundkörpers durch Dampfsilizieren zu versiegeln.

Das erfindungsgemäße Verfahren zum Herstellen einer Schutzschicht auf einem keramischen Grundkörper ermöglicht eine gradierte Silizierung, d.h. eine Steuerung der Zusammensetzung innerhalb der Reaktionsschutzschicht. Zum Beispiel kann eine Silizium-Anreicherung an der Oberfläche der Reaktionsschutzschicht vorgesehen sein. Es können höhere Kohlenstoff-Anteile als Übergangsschicht zum Grundkörper ausgebildet werden. Es ist insbesondere die reaktive Anbindung der Reaktionsschutzschicht durch die zusätzliche Silizierung oberflächennaher Kohlenstoff-Bereiche des Grundkörpers möglich.

Das Aufbringen des Schlickers für die erste Schicht mit reaktivem Kohlenstoff auf den Grundkörper und/oder des Schlickers für die zweite Schicht mit Silizium auf die erste Schicht kann entweder durch einfache Techniken wie Streich- / Pinsel- / Spachteltechnik und Tauchtechniken oder mittels gängiger, voll automatisierbarer Spritzapparaturen erfolgen. Dabei werden die Schlickereigenschaften wie Feststoffgehalt und Viskosität durch geeignete Maßnahmen den verwendeten Techniken angepasst. Der Vorteil bei der Verwendung von Spritzapparaturen liegt in der vollautomatischen Ausführbarkeit des Beschichtungsvorganges von Grundkörpern einfacher Geometrien und/oder komplexeren Bauteilen wie Triebwerkskomponenten.

Von der Erfindung ist ferner ein Bauteil mit einem Grundkörper aus einer mit Kohlenstofffasern verstärkten Keramik, z.B. C/C oder C/SiC, umfasst, und einer darauf aufgebrachten Schutzschicht, wobei die Schutzschicht nach einem der vorherigen Ansprüche hergestellt ist. Insbesondere ist das Bauteil als Triebwerkskomponenten vorgesehen.

Die Erfindung wird nachfolgend anhand der Figuren in der Zeichnung näher erläutert. Es zeigen:
- Fig. 1: eine schematische Querschnittsdarstellung eines Grundkörpers, auf den, in aufeinander folgenden Verfahrensschritten, eine erste und ei- ne zweite Schicht aufgebracht ist,
- Fig. 2: eine schematische Querschnittsdarstellung des herzustellenden Bau- teils nach einer thermischen Behandlung, und
- Fig. 3: einen Ablauf des erfindungsgemäßen Verfahrens zur Herstellung eines Bauteils mit einer Hochtemperatur geeigneten Schutzschicht.

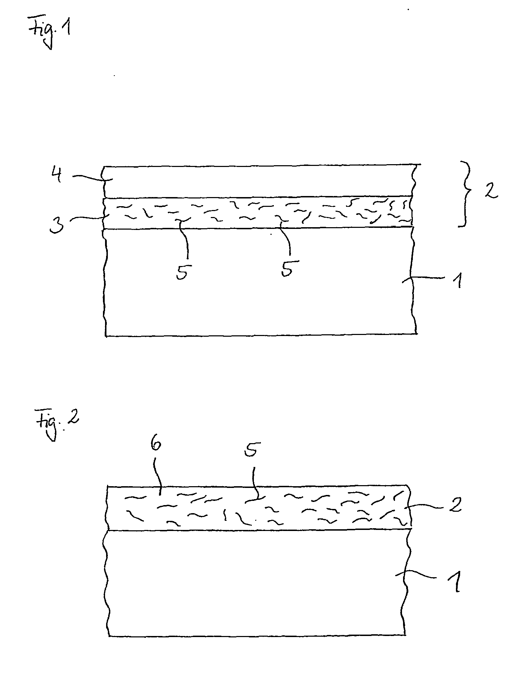

Fig. 1 zeigt eine schematische Querschnittsdarstellung eines Bauteils, das einen Grundkörper 1 aus einer mit Kohlenstofffasern verstärkten Keramik, z.B. C/C oder C/SiC, und eine auf den Grundkörper 1 aufgebrachte Schichtfolge 2 zur Ausbildung einer Schutzschicht aufweist. In Fig. 1 ist das Bauteil in einem Herstellungsstadium gezeigt, in dem der Grundkörper 1, z.B. eine Triebwerkskomponente, bereits fertig gestellt ist. Auf eine, gegen Korrosion oder Oxidation und ggf. Erosion zu schützende Oberfläche des Grundkörpers 1 wird zunächst eine erste Schicht 3 auf den Grundkörper 1 aufgebracht, wobei die erste Schicht 3 Schlicker mit reaktivem Kohlenstoff und Verstärkungsfasern 5, insbesondere Kurzfasern aus Kohlenstoff, umfasst.

Auf die erste Schicht 3 wird in einem weiteren Verfahrensschritt eine zweite Schicht 4 aufgebracht, welche Schlicker mit Silizium umfasst. Die erste Schicht 3 kann zusätzlich weitere Additive, insbesondere inerte oder reaktive Pulverzusätze, umfassen, welche die thermische Ausdehnung einer fertig gestellten Reaktionsschutzschicht auf der Oberfläche des Grundkörpers 1 beeinflussen. Die Zugabe der Verstärkungsfasern 5 in den Schlicker der ersten Schicht 3 beeinflusst die mechanischen Eigenschaften einer fertig gestellten Reaktionsschutzschicht.

Der in Fig. 1 gezeigte Schichtaufbau wird einer thermischen Behandlung unterzogen, in der Temperaturen oberhalb der Schmelztemperatur von Silizium, d.h. oberhalb von 1420 °C, erreicht werden. Bei der thermischen Behandlung dringt das verflüssigte Silizium der zweiten Schicht 4 in die erste Schicht 3 ein und reagiert dort mit dem Kohlenstoff zu Siliziumcarbid SiC. Dies ist schematisch in der Querschnittsdarstellung der Fig. 2 dargestellt. Die dabei gebildete Reaktionsschutzschicht 6 schützt den Grundkörper 1 im Hochtemperatureinsatz gegen Korrosion bzw. Oxidation. Dabei ist der thermische Ausdehnungskoeffizient der erzeugten Reaktionsschutzschicht 6 aufgrund der Zusammensetzung der Materialien der ersten Schicht 3 an den thermischen Ausdehnungskoeffizienten des Grundkörpers 1 anpassbar bzw. angepasst. Die Gefahr der Bildung von Rissen aufgrund unterschiedlicher thermischer Ausdehnungen ist dadurch vermieden oder zumindest verringert. Das Hinzufügen der Verstärkungsfasern 5 erhöht die Eigenfestigkeit und Bruchzähigkeit der Reaktionsschutzschicht 6 und führt damit zu einem besseren Schutz des Grundkörpers 1.

Je nach Zusammensetzung der ersten Schicht 3 und dem Anteil des Siliziums der zweiten Schicht 4 kann der Konvertierungsgrad bzw. die Zusammensetzung der Reaktionsschutzschicht 6 gesteuert werden. So ist es z.B. möglich, bei einem Silizium-Überschuss in der zweiten Schicht eine oberflächliche Silizierung des Grundkörpers 1 vorzunehmen, wodurch eine gute Anbindung der Reaktionsschutzschicht 6 an den Grundkörper 1 erzielbar ist. Ist der Grundkörper 1 als Sandwichstruktur ausgebildet, so können die inneren Oberflächen durch Dampfsilizieren versiegelt werden.

Das erfindungsgemäße Verfahren zur Herstellung der Reaktionsschutzschicht, d.h. das Aufbringen einer ersten und einer zweiten Schicht auf einen kohlenstofffaserverstärkten keramischen Grundkörper durch Streich- / Pinsel- / Spachtel- und Tauchtechniken oder durch voll automatisierbare Spritzapparaturen, kann nicht nur bei ebenen Oberflächen, sondern auch bei Grundkörpern mit komplex ausgebildeten Oberflächen erfolgen. Dabei lässt sich das Verfahren kostengünstig durchführen, da keinerlei Abänderung im Herstellungsprozess des Grundkörpers 1 notwendig ist und die Erzeugung der Reaktionsschutzschicht im Anschluss an die Erzeugung des Grundkörpers 1 erfolgen kann.

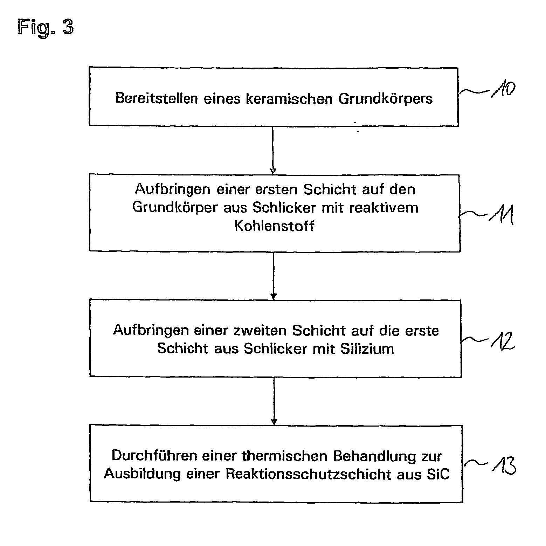

In Fig. 3 ist der Verfahrensablauf des erfindungsgemäßen Verfahrens noch einmal dargestellt. In einem ersten Verfahrensschritt 10 wird ein kohlenstofffaserverstärkter keramischer Grundkörper bereitgestellt. Auf diesem wird in einem zweiten Verfahrensschritt 11 eine erste Schicht aus Schlicker mit reaktivem Kohlenstoff aufgebracht. In einem weiteren Verfahrensschritt 12 wird auf die erste Schicht eine zweite Schicht aus Schlicker mit Silizium aufgebracht. Schließlich wird eine thermische Behandlung zur Ausbildung einer Reaktionsschutzschicht aus Siliziumcarbid durchgeführt (Verfahrensschritt 13), indem das Silizium der zweiten Schicht verflüssigt wird.

### Bezugszeichenliste

- 1: Grundkörper aus einer mit Kohfenstofffasern verstärkten Keramik
- 2: Schichtfolge
- 3: erste Schicht aus Schlicker mit reaktivem Kohlenstoff
- 4: zweite Schicht aus Schlicker mit Silizium
- 5: Verstärkungsfasern
- 6: Reaktionsschutzschicht

- 10: Verfahrensschritt
- 11: Verfahrensschritt
- 12: Verfahrensschritt
- 13: Verfahrensschritt

## Patentansprüche

1. Verfahren zur Herstellung eines Bauteils, das einen Grundkörper (1) und eine auf den Grundkörper (1) aufgebrachte Schutzschicht (2) aufweist, **gekennzeichnet durch** die folgenden Schritte:
- Bereitstellen des Grundkörpers (1) aus einer mit Kohlenstofffasern verstärkten Keramik;
- Aufbringen einer ersten Schicht (3) auf den Grundkörper (1), wobei die erste Schicht (3) Schlicker mit reaktivem Kohlenstoff umfasst;
- Aufbringen einer zweiten Schicht (4) auf die erste Schicht (3), wobei die zweite Schicht (4) Schlicker mit Silizium umfasst; und
- Durchführen einer thermischen Behandlung, in der das Silizium der zweiten Schicht (4) verflüssigt wird, so dass das flüssige Silizium in die erste Schicht (3) eindringt und mit dem reaktiven Kohlenstoff eine Reaktionsschutzschicht (6) aus Siliziumcarbid ausbildet;
**dadurch gekennzeichnet, dass**
dem Schlicker der ersten Schicht (3) Verstärkungsfasern (5), insbesondere Kurzfasern aus kohlenstoffhaltigem Material, beigemengt werden.

2. Verfahren nach Anspruch 1, **dadurch gekennzeichnet, dass** dem Schlicker der ersten Schicht (3) als Additive zu dem reaktiven Kohlenstoff pulverförmige inerte oder reaktive Stoffe zugefügt werden, welche die mechanischen Eigenschaften der Verstärkungsfasern (5) in der ersten Schicht (3) beeinflussen.

3. Verfahren nach Anspruch 1, **dadurch gekennzeichnet, dass** dem Schlicker der ersten Schicht (3) als Additive zu dem reaktiven Kohlenstoff pulverförmige inerte oder reaktive Stoffe zugefügt werden, welche die thermische Ausdehnung der ersten Schicht (3) beeinflussen.

4. Verfahren nach einem der vorherigen Ansprüche, **dadurch gekennzeichnet, dass** Silizium in dem Schlicker der zweiten Schicht (4) in einer solchen Menge vorgesehen wird, dass bei der Bildung der Reaktionsschutzschicht (6) ein Silizium-Überschuss vorliegt, und eine zumindest oberflächliche Silizierung der mit Kohlenstofffasern verstärkten Keramik des Grundkörpers (1) hergestellt wird.

5. Verfahren nach einem der Ansprüche 1 bis 3, **dadurch gekennzeichnet, dass** Silizium in dem Schlicker der zweiten Schicht (4) in einer solchen Menge vorgesehen wird, dass bei der Bildung der Reaktionsschutzschicht (6) ein Silizium-Überschuss vorliegt, um im Falle einer Sandwichstruktur des Grundkörpers (1) eine innere Oberfläche durch Dampfsilizieren zu versiegeln.

6. Verfahren nach einem der vorherigen Ansprüche, **dadurch gekennzeichnet, dass** das Aufbringen des Schlickers für die erste Schicht (3) auf den Grundkörper (1) und/oder des Schlickers für die zweite Schicht (4) auf die erste Schicht (3) durch Techniken wie Streich- / Pinsel- / Spachtel- und Tauchtechniken oder mittels voll automatisierbarer Spritzapparaturen erfolgt.

7. Verfahren nach einem der vorherigen Ansprüche, **dadurch gekennzeichnet, dass** als Keramikmaterial für den Grundkörper (1) Siliziumcarbid (SiC) oder Kohlenstoff (C) gewählt wird.

8. Bauteil mit einem Grundkörper (1) aus einer mit Kohlenstofffasern verstärkten Keramik und einer darauf aufgebrachten Schutzschicht (2), **dadurch gekennzeichnet, dass** die Schutzschicht (2) nach einem der vorherigen Ansprüche hergestellt ist.

9. Bauteil nach Anspruch 8, **dadurch gekennzeichnet, dass** dieses eine Triebwerkskomponente ist.

## Claims

1. Method for the production of a component, which has a base body (1) and a protective layer (2) applied to the base body (1), **characterized by** the following steps:
- providing the base body (1) made of a carbon-fibre-reinforced ceramic;
- applying a first layer (3) to the base body (1), the first layer (3) comprising a slip with reactive carbon;
- applying a second layer (4) to the first layer (3), the second layer (4) comprising a slip with silicon; and
- carrying out a thermal treatment, in which the silicon of the second layer (4) is liquefied, so that the liquid silicon penetrates into the first layer (3) and forms with the reactive carbon a reaction protective layer (6) composed of silicon carbide;
**characterized in that**
reinforcing fibres (5), in particular short fibres of carbon-containing material, are admixed with the slip of the first layer (3).

2. Method according to Claim 1, **characterized in that** powdery inert or reactive materials which influence the mechanical properties of the reinforcing fibres (5) in the first layer (3) are added to the slip of the first layer (3) as additives to the reactive carbon.

3. Method according to Claim 1, **characterized in that** powdery inert or reactive materials which influence the thermal expansion of the first layer (3) are added to the slip of the first layer (3) as additives to the reactive carbon.

4. Method according to one of the preceding claims, **characterized in that** silicon in the slip of the second layer (4) is provided in such a quantity that during the formation of the reaction protective layer (6) there is an excess of silicon, and an at least superficial siliconization of the carbon-fibre-reinforced ceramic of the base body (1) is produced.

5. Method according to one of claims 1 to 3, **characterized in that** silicon in the slip of the second layer (4) is provided in such a quantity that during the formation of the reaction protective layer (6) there is an excess of silicon in order in the case of a sandwich structure of the base body (1) to seal an inner surface by vapour phase siliconizing.

6. Method according to one of the preceding claims, **characterized in that** the application of the slip for the first layer (3) to the base body (1) and/or of the slip for the second layer (4) to the first layer (3) is performed by techniques such as painting, brushing, filling and dipping or by means of fully automatable spraying equipment.

7. Method according to one of the preceding claims, **characterized in that** silicon carbide (SiC) or carbon (C) is chosen as the ceramic material for the base body (1).

8. Component comprising a base body (1), made of a carbon-fibre-reinforced ceramic, and a protective layer (2) applied thereto, **characterized in that** the protective layer (2) is produced according to one of the preceding claims.

9. Component according to Claim 8, **characterized in that** it is an engine component.

## Revendications

1. Procédé de fabrication d'un composant qui présente un corps de base (1) et une couche de protection (2) appliquée sur le corps de base (1), le procédé étant **caractérisé par** les étapes suivantes :
- prévoir le corps de base (1) en une céramique renforcée par des fibres de carbone,
- appliquer une première couche (3) sur le corps de base (1), la première couche (3) comprenant une barbotine contenant du carbone réactif,
- appliquer une deuxième couche (4) sur la première couche (3), la deuxième couche (4) comprenant une barbotine au silicium et
- exécuter un traitement thermique dans lequel le silicium de la deuxième couche (4) est liquéfié de telle sorte que le silicium liquide pénètre dans la première couche (3) et forme avec le carbone réactif une couche (6) de protection réactive en carbure de silicium,
**caractérisé en ce que**
des fibres de renfort (5), en particulier de courtes fibres en matériau contenant du carbone, sont mélangées à la barbotine de la première couche (3).

2. Procédé selon la revendication 1, **caractérisé en ce que** comme additif, en plus du carbone réactif, on ajoute à la première couche (3) des substances pulvérulentes inertes ou réactives qui agissent sur les propriétés mécaniques des fibres de renfort (5) présentes dans la première couche (3).

3. Procédé selon la revendication 1, **caractérisé en ce que** comme additif, en plus du carbone réactif, on ajoute à la première couche (3) des substances pulvérulentes inertes ou réactives qui agissent sur la dilatation thermique de la première couche (3).

4. Procédé selon l'une des revendications précédentes, **caractérisé en ce que** du silicium est prévu dans la barbotine de la deuxième couche (4) en quantité telle qu'un excès de silicium soit dégagé lors de la formation de la couche (6) de protection réactive et qu'une silicification au moins superficielle de la céramique renforcée de fibres de carbone du corps de base (1) soit réalisée.

5. Procédé selon l'une des revendications 1 à 3, **caractérisé en ce que** du silicium est prévu dans la barbotine de la deuxième couche (4) en quantité telle qu'un excès de silicium soit dégagé lors de la formation de la couche (6) de protection réactive et qu'au cas où le corps de base (1) présente une structure en sandwich, une surface intérieure soit scellée par silicification en phase vapeur.

6. Procédé selon l'une des revendications précédentes, **caractérisé en ce que** l'application de la barbotine pour la première couche (3) sur le corps de base (1) et/ou de la barbotine pour la deuxième couche (4) sur la première couche (3) s'effectue par des techniques telles que l'enduction, l'application au pinceau, l'application à la truelle ou l'immersion, ou au moyen d'appareils de pulvérisation entièrement automatisés.

7. Procédé selon l'une des revendications précédentes, **caractérisé en ce que** le matériau céramique sélectionné pour le corps de base (1) est le carbure de silicium (SiC) ou le carbone (C).

8. Composant doté d'un corps de base (1) en une céramique renforcée de fibres de carbone sur laquelle est appliquée une couche de protection (2), **caractérisé en ce que** la couche de protection (2) est formée selon l'une des revendications précédentes.

9. Composant selon la revendication 8, **caractérisé en ce qu'**il est un composant pour ensemble de propulsion.
